# EUROPEAN PATENT SPECIFICATION

(11) **EP 1 031 092 B1**
(45) Date of publication and mention of the grant of the patent: **04.09.2002**
(21) Application number: 98952903.7
(22) Date of filing: 11.11.1998
(51) Int. Cl.: G06F 13/28

(54) **BYTE ALIGNMENT METHOD AND APPARATUS**
VERFAHREN UND VORRICHTUNG ZUR BYTEAUSRICHTUNG
PROCEDE ET APPAREIL D'ALIGNEMENT D'OCTETS

(30) Priority: 13.11.1997 GB 9724027
(43) Date of publication of application: 30.08.2000
(73) Proprietor: Virata Limited, Cambridge CB4 4WB (GB)
(72) Inventor: MILWAY, David, Russell, Cambridgeshire CB4 4RB (GB)
(74) Representative: Kazi, Ilya
(86) International application number: GB9803369
(87) International publication number: WO99026156

(56) References cited:
- WO-A-95/06285
- US-A- 5 168 561
- US-A- 5 392 406

## Description

This invention relates to a method and apparatus for aligning bytes in a block of data consisting of a plurality of words, each consisting of predetermined number of bytes of predetermined bit length. The invention finds particular, (but not exclusive use) in aligning bytes on a word boundary during a block data transfer, for example, at an interface between memory and peripheral devices in computer systems. The byte alignment method can also be used with advantage in translating the encapsulation of a protocol labelled data block, for example, in switching data from Ethernet to ATM.

Where network software performs protocol conversions, headers and trailers in the protocol labels can be modified and bytes can thereby become misaligned with a word boundary. This can slow up a data transfer. By way of example, in a computer system having a processor with a word size of 32 bits, a 32-bit wide memory and a 32-bit wide memory to network interface, (e.g. as in an ATM network where a basic transmission operation sends an ATM cell by writing thirteen 32-bit words to the interface), the transfer will be efficient when the data to be transmitted is aligned on a word boundary in memory. In this case, the processor initiates a data transfer and each word will be copied from memory to the network device. However, if the data is aligned with an arbitrary byte boundary, rather than a word boundary, transfer will be slower. The processor must then either copy and then re-align the data before starting the transfer operation, or it must construct and write the words individually to the network device.

The invention seeks to solve the foregoing problem. At least in a preferred embodiment, it may be considered as an enhancement to data transfer that enables a byte to be shifted in order to be aligned bytes with a word boundary prior to or during the transfer.

WO-A-94/07199 implements a two stage sort and requires the use of individual byte lane valid bits for operation. This results in the output word (32 bits) having possible invalid bytes within the stream. The intention is to allow arbitrary streams of DMA data to be re-aligned with minimal processor intervention. EP-A-94304589.8 incorporates byte alignment logic into a peripheral itself and the byte alignment logic is similar to the WO-A-94/07199 byte lane valid bits, but it also has individual mask bits supplied by some external control logic. US-A-5168561 discloses byte alignment technique which uses a carrier register and a data selector with four 4:1 multiplexers.

Features of the invention are defined by the attached claims.

The invention can be embodied, in practice, so that:
(i) an output data stream, 32 bits wide, is always aligned to a word boundary;
(ii) an offset, stored in the unused byte portion of the input (or residue) register, is always loaded into the input (or residue) register, and
(iii) the offset and input (or residue) register are readable by a processor which implements the method of the invention

This provides a rapid way to re-align multiple different streams of data all of which are on different boundaries.

The byte alignment method of the invention can be advantageously used in translating the encapsulation of a protocol labelled data block by the steps of:
removing an original header from the data block;
providing a new header;
transferring the new header and the original data block (into storage) using the method at Claim 1 to provide any necessary byte shift in the data block to compensate for the byte misalignment.

In the latter method, the old trailer can also be removed and replaced with a new trailer whereby the byte alignment method is also used to correct any byte misalignment in the new trailer as well as in the new header. The new header, the original data block and the new trailer are then transferred (into storage) with any necessary byte shift in the data block to compensate for the byte misalignment.

The advantage of such method of translation is that there is no unnecessary copying of the data block.

The latter method can be incorporated in suitable apparatus having respective means for carrying out the steps of the method.

A preferred embodiment of the invention will now be described with reference to the accompanying drawings, in which:
Fig. 1 is a block diagram of circuitry for correcting byte misalignment;
Fig. 2 is a schematic diagram of byte alignment logic used in the circuitry of Figure 1;
Fig. 3 illustrates the operation of the byte alignment logic;
Fig. 4 illustrates the byte positions in the byte alignment register of the byte alignment logic;
Fig. 5 is a table drawing the relationship between alignment bits and the amount of byte misalignment; and

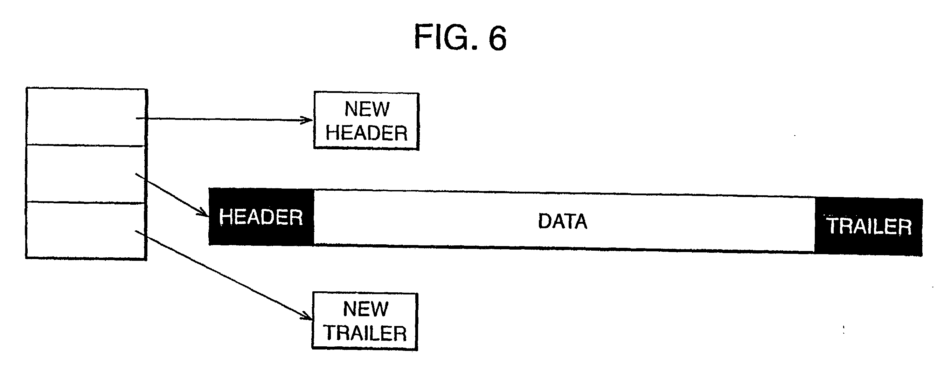

Fig. 6 illustrates how the byte alignment logic can be applied in a method of translating the encapsulation of a protocol labelled block of data.

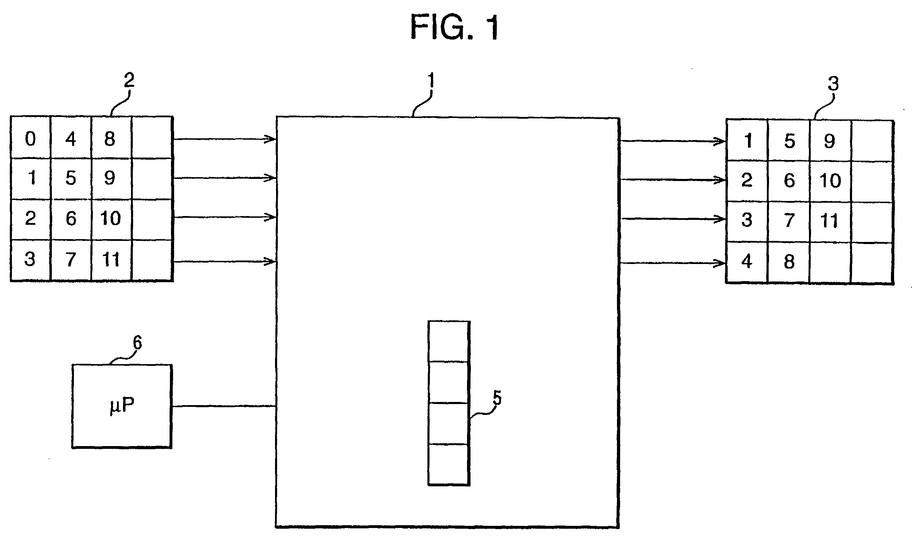

Fig. 1 schematically illustrates a memory I having an input buffer 2 equipped with a read pointer for reading data into the memory, and an output buffer 3 having a write pointer which enables data to be written into the output buffer 3. In the example illustrated, the data in the input buffer 2 is not aligned, since a gap, represented by an "O" appears in the first byte position and the first byte "1" of data appears in the second byte position (in the first column of the input buffer). The first four bytes 1, 2, 3, 4 of data are shown aligned in the output buffer 3. The memory 1 includes byte alignment logic 5 which is described in more detail below. A microprocessor 6 controls the operation of the system.

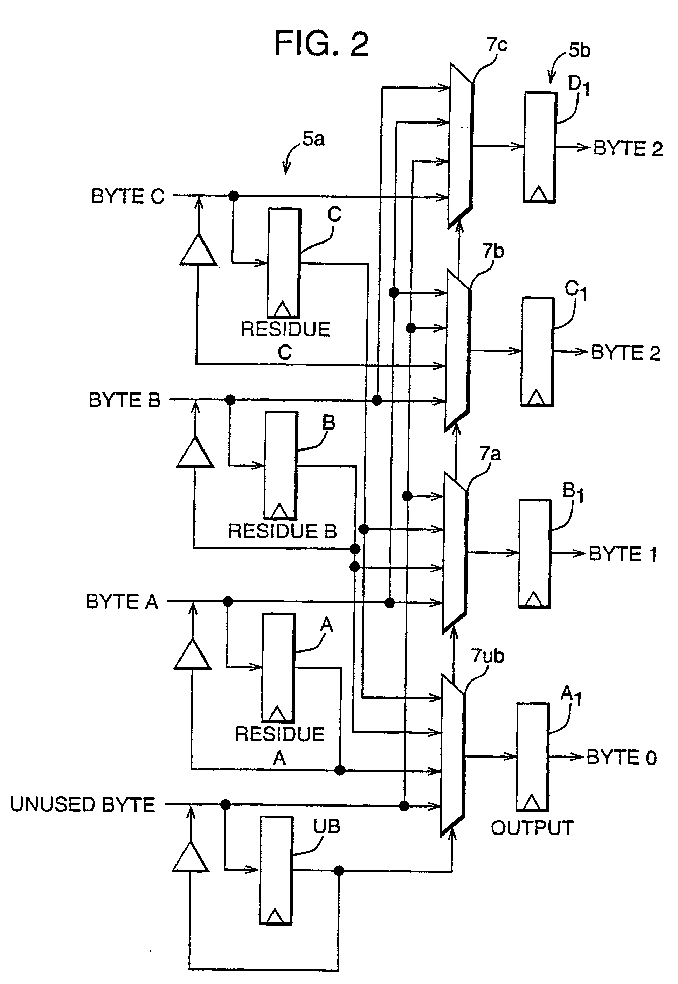

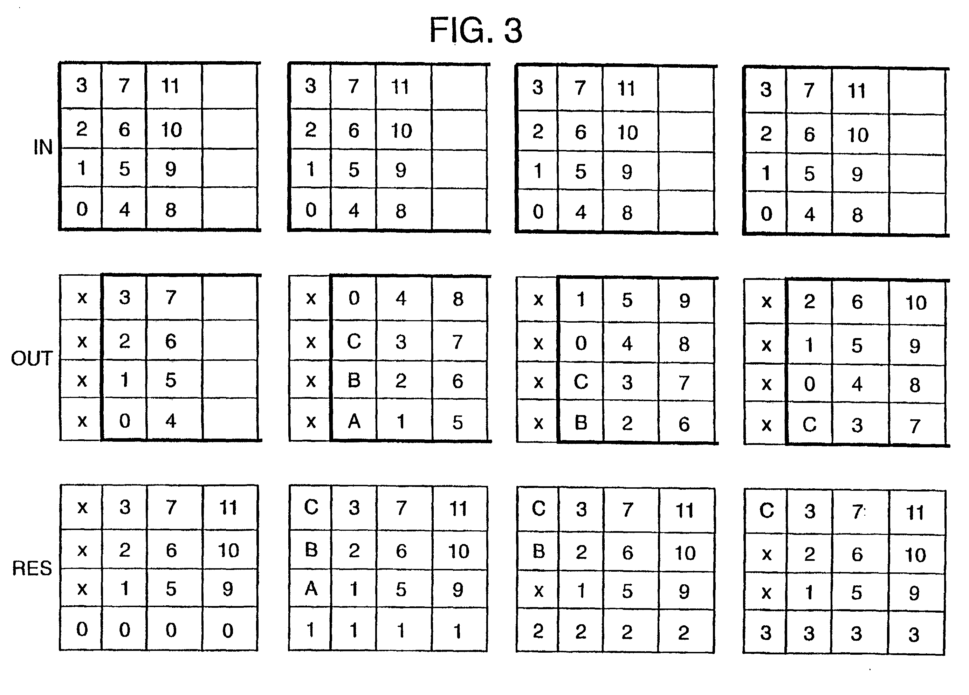

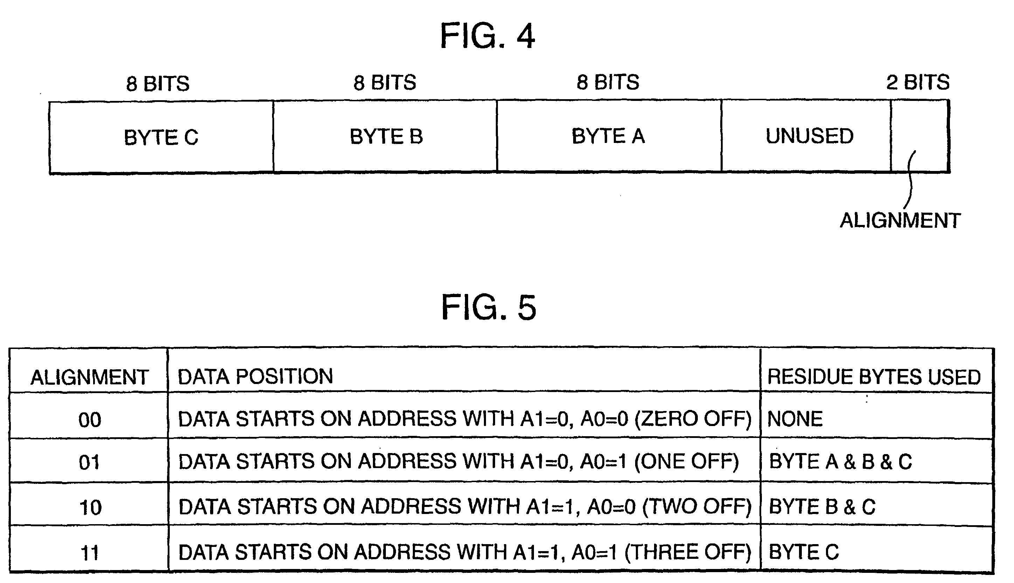

Fig. 2 illustrates the byte alignment logic 5 in more detail and Fig. 3 illustrates the operation of the byte alignment logic. Fig. 4 shows (in this example only) 4 byte positions in a byte alignment register 5a of the byte alignment logic 5. These are C, B, A and UB (i.e. an unused byte position). The first four bytes in the data block in the input buffer 2 are loaded into the the byte alignment register 5a, so that the byte positions C, B, A, UB will contain bytes 3, 2, 1, O of the data block. The unused byte position UB will contain byte O which represents byte misalignment. The amount by which the byte is misaligned with the word boundary is encoded in the unused position UB. In the illustrative example, each byte position contains 8 bits and in the unused byte position UB, two bits are used for directing alignment. For example, if the byte misatignmeat is "one" byte, two alignment bits 01 are stored in position UB. These bits are used, to control the operation of switching means 7c, 7b, 7a, 7ub so as to correct the byte misalignment. The first three bytes of the data block in Residue registers A, B, C are transferred respectively positions into A₁, B₁, C₁ in output stage 5b of the byte alignment logic 5, thereby correcting the misalignment. The alignment bits O1 remaining in position UB serve to direct the fourth byte from the subsequent word (which is "4") into position D₁ in the output stage 5b. After transferring the first four bytes from the input buffer 2 into the output buffer 3, the alignment bits (01) remaining in position UB cause the switching means 7c,7b,7a,7ub to direct each set of four subsequent bytes of the data block (in the input buffer 2) into the output stage 5b, i.e. in accordance with the same 3 byte, 1 byte switching cycle or pattern. In this way, the whole input block is transferred, with alignment, to the output buffer 3.

It can be seen in Fig. 5 that alignment bits 10 and 11 will respectively shift the input bytes by 2 and 3 byte positions controlling the operation of the switching means 7c, 7b, 7a, 7ub in accordance with the 2 byte, 2 byte or 1 byte, 3 byte pattern. Fig. 3 shows the operation of the alignment logic in more detail and Fig. 5 shows the relationship between the alignment bits and data position.

The above example of the mode of operation is fourth explained below (in which there is a one byte misalignment) in which misalignment bits 01 control the switching operation.

### Example:

The diagrams show consecutive bytes in memory, with each column being the bytes of one word starting on a 32-bit address boundary.

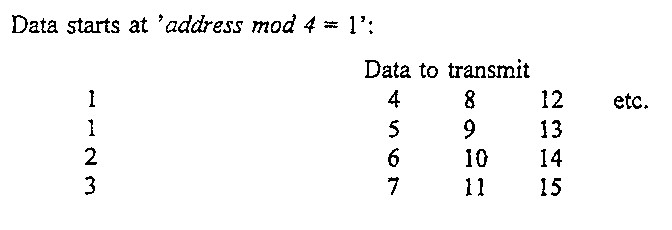

The alignment register is then loaded with the values 1, 2 and 3 (the bytes before the first word boundary) and the offset value 1.

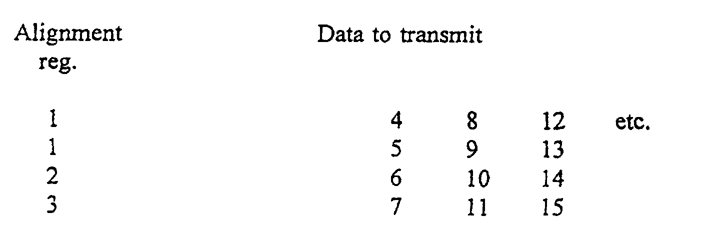

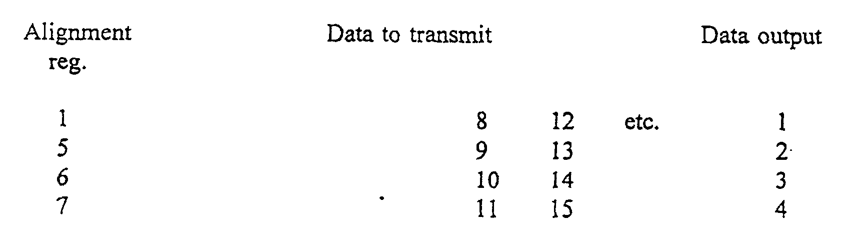

After transferring the second word the data looks like:

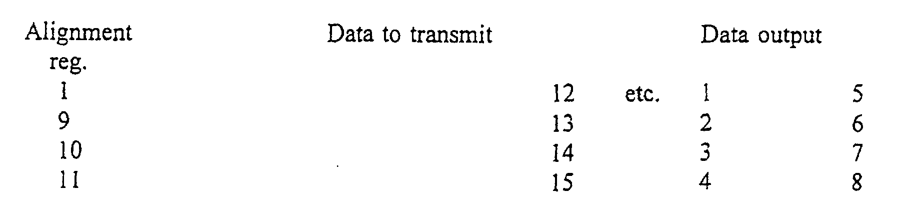

The byte alignment register of the invention is useful in handling network protocols in computer systems, and more particularly in the translation of the encapsulation of a protocol data block without unnecessary copying of the enclosed data.

Consider a computer system connected to one or more networks, and running protocol bridging or routing software. The computer system has a processor with a word size of 32 bits, 32-bit wide memory, and 32-bit wide Direct Memory Access (DMA) interfaces to its network ports.

Each bridging or routing operation involves:
1. receiving a protocol packet from a network port
2. looking up its designation address to determine its target port and protocol
3. if necessary, converting the packet format to the new protocol encapsulation
4. transmitting the packet on the destination port

Step 3 can account for a high proportion of the total processor time spent dealing with the packet. The format conversion may be necessary either because the source and destination networks are of different hardware types (e.g. Ethernet and ATM) or because they are different virtual networks on the same physical layer (e.g. IP on LANE Emulation and Classical IP, both running over ATM).

In general, a network packet (for example an Ethernet frame or an IP packet) consists of a protocol header, the data being transported, and a protocol trailer, laid out in memory as shown:
HEADER DATA TRAILER

After the packet has passed through the bridge or router, it contains exactly the same data, but may have a new header and trailer (with changed sizes) corresponding to the new protocol encapsulation:
NEW HEADER DATA NEW TRAILER

There are two main methods known in the prior art for arranging to transmit the reformatted packet:
1. By copying.
   A new memory buffer is allocated. The new header is constructed in the buffer, the data is copied in from the original packet, and the new trailer is added, forming the new packet in contiguous memory as shown above. This is straightforward, but is inefficient because all data is copied in memory as it passes through the bridge or router.
2. Scatter/gather.
   The new header and trailer are constructed in separate buffers, and a structure is passed to the transmission port containing pointers to the new header, the original data, and the new trailer. The transmission port driver works from these three buffers to reassemble the complete packet as it writes to the network.

The scatter/gather method is efficient, but cannot be used directly on a computer system which has memory and I/O organised as 32-bit words. Since the original packet was received starting on a word memory boundary, the data within it may not be on a word boundary. Also, the new header and trailer may not be an exact number of words in length. Thus the new packet cannot be transmitted directly via the 32-bit DMA interface to the network.

An embodiment of the invention allows the transmission to be handled efficient as follows. Assume the new header and trailer are constructed starting on word boundaries:
1. Set the residue register (byte alignment register 5a) to zero and transfer (by DMA) the whole words in the New Header.
2. Set the residue register according to the bytes left over from the New Header and the alignment of the start of the Data. (It may be simpler to copy a few bytes from the Data to the end of the New Header, to ensure that the New Header contains a whole number of words.)
3. Transfer the whole words in the Data.
4. Set the residue register from the remaining part of the Data and the start of the Trailer. (Again, copying a few bytes to the start of the Trailer may simplify this.)
5. Transfer enough words to include the last byte of the Trailer.

Further refinements are possible. For example, the New Header could be constructed so that it ended on an alignment complementary to that of the start of the Data, and the Trailer could be aligned to match the end of the Data. By copying the odd bytes from the start and end of the Data to the New Header and Trailer respectively, the whole transfer could be completed as 3 DMA operations with no intermediate adjustments of the residue register.

## Claims

1. A method of aligning bytes on a word boundary in a block of data consisting of a plurality of words, each word having a predetermined number of bytes of predetermined bit length, the block of data not being aligned with a word boundary, the method including the steps of:
loading a first word into a byte alignment register (5a), the first word comprising a byte containing alignment offset bits representing misalignment and *n* data bytes, the byte alignment register (5a) having an unused byte position (UB) for storing the alignment offset bits specifying the position of the word boundary and residue registers (RESIDUE A,RESIDUE B, RESIDUE C) for storing the remainding bytes of the first word;
transferring the *n* data bytes out of the alignment register (5a) to an output stage (5b) to form output bytes of an output word under the control of the alignment bits;
directing at least one byte from a subsequent word to the output stage (5b) under the control of the alignment bits to complete the output word and storing remaining bytes of the subsequent word in said residue registers (RESIDUE A, RESIDUE B, RESIDUE C) of the byte alignment register (5a);
transferring further subsequent words to the output stage (5b) under the control of the alignment bits which remain in the unused byte position (UB) to transfer the data block with alignment to a word boundary.

2. A method according to Claim 1, wherein the word is a four byte word.

3. A method according to Claim 2, wherein the data starts at an offset of one byte from a word boundary, wherein, in said loading step, the unused byte position is loaded with an offset value of one and three data bytes are loaded into the residue registers, and wherein the output word is formed by transferring the three bytes from the residue registers and directing one byte from the subsequent word to the output stage.

4. A method according to Claim 2, wherein the data starts at an offset of two bytes from a word boundary, wherein, in said loading step, the unused byte position is loaded with an offset value of two and two data bytes are loaded into the residue portions, and wherein the output word is formed by transferring two bytes from the residue registers and directing two bytes from the subsequent word to the output stage.

5. A method according to Claim 2, wherein the data starts at an offset of three bytes from a word boundary, wherein, in said loading step, the unused byte position is loaded with an offset value of three and one data byte is loaded into the residue registers, and wherein the output word is formed by transferring one byte from the residue registers and directing three bytes from the subsequent word to the output stage.

6. A method according to any preceding claim, further comprising making the alignment register readable by a processor.

7. A method of translating a protocol labelled data block, the method comprising:
removing an original header from the data block;
providing a new header; and
transferring the new header and data block using the method of any preceding claim to provide any necessary byte shift in the data block to compensate for byte misalignment.

8. A method according to any preceding claim comprising an initial step of loading data into the byte alignment register and a subsequent step of transferring data by a DMA transfer.

9. Apparatus for aligning bytes on a word boundary in a block of data consisting of a plurality of words, each word having a predetermined number of bytes of predetermined bit length, the block of data not being aligned with a word boundary, the apparatus including:
a byte alignment register (5a) comprising:
an unused byte position (UB) for storing alignment offset bits in a first byte of a first word, the alignmnet offset bits specifying the position of the word boundary; and
residue registers (A, B, C) for storing the remaining bytes of the first word;
means for loading a first word into the byte alignment register (5a), the first word comprising a byte containing alignment offset bits representing misalignment and *n* data bytes;
switching means (7a,7b,7c,7d, 7ub) for selectively transferring, under the control of the alignment offset bits, the *n* data bytes from the residue registers of the alignment register (5a) to an output stage (5b) to form output bytes of an output word and for directing at least one byte from a subsequent word to the output stage (5b) under the control of the alignment bits to complete the output word;
means for storing remaining bytes of the subsequent word in said residue registers (A, B, C) of the byte alignment register (5a);
means for transferring further subsequent words to the output stage (5b) under the control of the alignment bits which remain in the unused byte position (UB) to transfer the data block with alignment to a word boundary.

## Patentansprüche

1. Verfahren zur Byte-Ausrichtung (Byte-Alignment) auf einer Wortgrenze in einem Block von Daten, der aus einer Mehrzahl von Worten besteht, wobei jedes Wort eine vorbestimmte Anzahl von Bytes einer vorbestimmten Bitlänge aufweist, wobei der Block von Daten nicht mit einer Wortgrenze ausgerichtet ist, das Verfahren umfassend die folgenden Schritte:
ein erstes Wort wird in einen Byte-Ausrichtungsspeicher (5a) geladen, wobei das erste Wort ein Byte umfasst, das Ausrichtungsversatzbits aufweist, die eine Fehlausrichtung repräsentieren, sowie n Datenbytes, wobei der Byte-Ausrichtungsspeicher (5a) eine ungenutzte Byteposition (UB) zum Speichern der Ausrichtungsversatzbits aufweist, welche die Position der Wortgrenze spezifiziert, sowie Restspeicher (REST A, REST B, REST C), um die verbleibenden Bytes des ersten Worts zu speichern;
die n Datenbytes werden aus dem Ausrichtungsspeicher (5a) an eine Ausgangsstufe (5b) gesendet, um Ausgabebytes eines Ausgabewortes unter der Steuerung der Ausrichtungsbits zu bilden;
zumindest ein Byte von einem nachfolgenden Wort wird zu der Ausgangsstufe (5b) unter der Steuerung der Ausrichtungsbits gerichtet, um das Ausgabewort zu vervollständigen und um verbleibende Bytes des nachfolgenden Worts in den Restspeichern (REST A, REST B, REST C) des Byte-Ausrichtungsspeichers (5a) zu speichern;
weitere nachfolgende Worte werden zu der Ausgangsstufe (5b) unter der Steuerung der Ausrichtungsbits gesendet, die in der ungenutzten Byteposition (UB) verbleiben, um den Datenblock in Ausrichtung zu einer Wortgrenze zu übermitteln.

2. Verfahren nach Anspruch 1, bei dem das Wort ein Vier-Byte-Wort ist.

3. Verfahren nach Anspruch 2, bei dem der Datenwert bei einem Versatz von einem Byte von einer Wortgrenze beginnt, wobei bei dem Ladeschritt die ungenutzte Byteposition mit einem Versatzwert von Eins geladen wird und drei Datenbytes in die Restspeicher geladen werden und wobei das Ausgabewort durch Übermittlung der drei Bytes von den Restspeichern und durch Leiten von einem Byte von dem nachfolgenden Wort zu der Ausgangsstufe gebildet wird.

4. Verfahren nach Anspruch 2, bei dem der Datenwert mit einem Versatz von zwei Bytes von einer Wortgrenze beginnt, wobei bei dem Ladeschritt die ungenutzte Byteposition mit einem Versatzwert von Zwei geladen wird und zwei Datenbytes in die Restbereiche geladen werden und wobei das Ausgabewort durch Übermittlung von zwei Bytes von den Restspeichern und durch Leiten von zwei Bytes von dem nachfolgenden Wort zu der Ausgangsstufe gebildet wird.

5. Verfahren nach Anspruch 2, bei dem der Datenwert mit einem Versatz von drei Bytes von einer Wortgrenze beginnt, wobei bei dem Ladeschritt die ungenutzte Byteposition mit einem Versatzwert von Drei geladen wird und ein Datenbyte in die Restspeicher geladen wird und wobei das Ausgabewort durch Übermittlung von einem Byte von den Restspeichern und durch Leiten von drei Bytes von dem nachfolgenden Wort zu der Ausgangsstufe gebildet wird.

6. Verfahren nach einem der vorhergehenden Ansprüche, weiterhin umfassend den Schritt, dass der Ausrichtungsspeicher für einen Prozessor lesbar gemacht wird.

7. Verfahren zum Übersetzen eines mit einem Protokoll gekennzeichneten Datenblocks, das Verfahren umfassend die Schritte:
ein Original-Nachrichtenkopf bzw. Original-Header wird von dem Datenblock entfernt;
ein neuer Nachrichtenkopf bzw. ein neuer Header wird bereitgestellt; und
der neue Nachrichtenkopf bzw. Header und der Datenblock werden unter Verwendung des Verfahrens nach einem der vorhergehenden Ansprüche übermittelt, um für jegliche notwendige Byteverschiebung in dem Datenblock zu sorgen, um eine Byte-Fehlausrichtung zu kompensieren.

8. Verfahren nach einem der vorhergehenden Ansprüche, umfassend einen Anfangsschritt, bei dem Daten in den Byte-Ausrichtungsspeicher geladen werden, sowie einen nachfolgenden Schritt, bei dem Daten durch einen DMA-Transfer übermittelt werden.

9. Vorrichtung zur Byte-Ausrichtung (Byte-Alignment) auf einer Wortgrenze in einem Block von Daten, der aus einer Mehrzahl von Worten besteht, wobei jedes Wort eine vorbestimmte Anzahl von Bytes einer vorbestimmten Bitlänge aufweist, wobei der Block von Daten nicht mit einer Wortgrenze ausgerichtet ist, die Vorrichtung umfassend:
einen Byte-Ausrichtungsspeicher (5a), umfassend:
eine ungenutzte Byteposition (UB) zum Speichern von Ausrichtungsversatzbits in einem ersten Byte eines ersten Worts, wobei die Ausrichtungsversatzbits die Position der Wortgrenze spezifizieren; und
Restspeicher (A, B, C) zum Speichern der verbleibenden Bytes des ersten Worts;
Mittel zum Laden eines ersten Worts in den Byte-Ausrichtungsspeicher (5a), wobei das erste Wort ein Byte umfasst, das Ausrichtungsversatzbits enthält, die eine Fehlausrichtung repräsentieren, sowie n Datenbytes;
Schaltmittel (7a, 7b, 7c, 7d, 7ub) um selektiv unter der Steuerung der Ausrichtungsversatzbits die n Datenbytes von den Restspeichern des Ausrichtungsspeichers (5a) an eine Ausgangsstufe (5b) zu übermitteln, um Ausgabebytes eines Ausgabewortes zu bilden und um zumindest ein Byte von einem nachfolgenden Wort zu der Ausgangsstufe (5b) unter der Steuerung der Ausrichtungsbits zu leiten, um das Ausgabewort zu vervollständigen;
Mittel zum Speichern von verbleibenden Bytes des nachfolgenden Wortes in den Restspeichern (A, B, C) des Byte-Ausrichtungsspeichers (5a);
Mittel zum Übermitteln von weiteren nachfolgenden Worten an die Ausgangsstufe (5b) unter der Steuerung der Ausrichtungsbits, die in der ungenutzten Byteposition (UB) verbleiben, um den Datenblock in Ausrichtung zu einer Wortgrenze zu übermitteln.

## Revendications

1. Un procédé d'alignement de multiplets sur une frontière de mot dans un bloc de données consistant en une multiplicité de mots, chaque mot ayant un nombre prédéterminé de multiplets d'un nombre de bits prédéterminé, le bloc de données n'étant pas aligné avec une frontière de mot, le procédé comprenant les étapes suivantes :
on charge un premier mot dans un registre d'alignement de multiplets (5a), le premier mot comprenant un multiplet contenant des bits de décalage d'alignement représentant un défaut d'alignement et n multiplets de données, le registre d'alignement de multiplets (5a) ayant une position de multiplet inutilisée (UB) pour stocker les bits de décalage d'alignement spécifiant la position de la frontière de mot, et des registres de résidu (RESIDUE A, RESIDUE B, RESIDUE C) pour stocker les multiplets restants du premier mot;
on transfère les n multiplets de données hors du registre d'alignement (5a) vers un étage de sortie (5b) pour former des multiplets de sortie d'un mot de sortie, sous la commande des bits d'alignement;
on dirige au moins un multiplet à partir d'un mot suivant vers l'étage de sortie (5b) sous la commande des bits d'alignement pour compléter le mot de sortie et on stocke des multiplets restants du mot suivant dans les registres de résidu (RESIDUE A, RESIDUE B, RESIDUE C) du registre d'alignement de multiplets (5a);
on transfère des mots suivants ultérieurs vers l'étage de sortie (5b) sous la commande des bits d'alignement qui restent dans la position de multiplet inutilisée (UB), pour transférer le bloc de données en alignement sur une frontière de mot.

2. Un procédé selon la revendication 1, dans lequel le mot est un mot de quatre multiplets.

3. Un procédé selon la revendication 2, dans lequel les données commencent avec un décalage d'un multiplet à partir d'une frontière de mot, dans lequel, dans l'étape de chargement, une valeur de décalage égale à un est chargée dans la position de multiplet inutilisée et trois multiplets de données sont chargés dans les registres de résidu, et dans lequel le mot de sortie est formé en transférant les trois multiplets à partir des registres de résidu et en dirigeant vers l'étage de sortie un multiplet provenant du mot suivant.

4. Un procédé selon la revendication 2, dans lequel les données commencent à un décalage de deux multiplets à partir d'une frontière de mot, dans lequel, dans l'étape de chargement, une valeur de décalage de deux est chargée dans la position de multiplet inutilisée et deux multiplets de données sont chargés dans les parties de résidu, et dans lequel le mot de sortie est formé en transférant deux multiplets à partir des registres de résidu et en dirigeant vers l'étage de sortie deux multiplets provenant du mot suivant.

5. Un procédé selon la revendication 2, dans lequel les données commencent à un décalage de trois multiplets à partir d'une frontière de mot, dans lequel, dans l'étape de chargement, une valeur de décalage de trois est chargée dans la position de multiplet inutilisée et un multiplet de données est chargé dans les registres de résidu, et dans lequel le mot de sortie est formé en transférant un multiplet à partir des registres de résidu et en dirigeant vers l'étage de sortie trois multiplets provenant du mot suivant.

6. Un procédé selon l'une quelconque des revendications précédentes, dans lequel, en outre, on fait en sorte que le registre d'alignement soit lisible par un processeur.

7. Un procédé de traduction d'un bloc de données étiqueté conformément à un protocole, le procédé comprenant :
la suppression d'un en-tête original du bloc de données;
l'incorporation d'un nouvel en-tête; et
le transfert du nouveau bloc d'en-tête et de données en utilisant le procédé de l'une quelconque des revendications précédentes, pour produire un décalage de multiplet nécessaire quelconque, dans le bloc de données, pour compenser un défaut d'alignement de multiplets.

8. Un procédé selon l'une quelconque des revendications précédentes, comprenant une étape initiale consistant à charger des données dans le registre d'alignement de multiplets, et une étape suivante consistant à transférer des données par un transfert d'accès direct en mémoire (DMA).

9. Dispositif pour aligner des multiplets sur une frontière de mot dans un bloc de données consistant en une multiplicité de mots, chaque mot ayant un nombre prédéterminé de multiplets d'un nombre de bit prédéterminé, le bloc de données n'étant pas aligné avec une frontière de mot, le dispositif comprenant :
un registre d'alignement de multiplets (5a) comprenant :
une position de multiplet inutilisée (UB) pour stocker des bits de décalage d'alignement dans un premier multiplet d'un premier mot, les bits de décalage d'alignement spécifiant la position de la frontière de mot; et
des registres de résidu (A, B, C) pour stocker les multiplets restants du premier mot;
des moyens pour charger un premier mot dans le registre d'alignement de multiplets (5a), le premier mot comprenant un multiplet contenant des bits de décalage d'alignement représentant un défaut d'alignement et n multiplets de données;
des moyens de commutation (7a, 7b, 7c, 7d, 7ub) pour transférer sélectivement, sous la commande des bits de décalage d'alignement, les n multiplets de données à partir des registres de résidu du registre d'alignement (5a) vers un étage de sortie (5b), pour former des multiplets de sortie d'un mot de sortie, et pour diriger vers l'étage de sortie (5b) au moins un multiplet provenant d'un mot suivant, sous la commande des bits d'alignement, pour compléter le mot de sortie;
des moyens pour stocker des multiplets restants du mot suivant dans les registres de résidu (A, B, C) du registre d'alignement de multiplets (5a);
des moyens pour transférer vers l'étage de sortie (5b) des mots suivants ultérieurs, sous la commande des bits d'alignement qui restent dans la position de multiplet inutilisée (UB), pour transférer le bloc de données dans une condition d'alignement sur une frontière de mot.
